# EUROPÄISCHE PATENTANMELDUNG

(11) **EP 1 168 226 A1**
(43) Veröffentlichungstag der Anmeldung: **02.01.2002**
(21) Anmeldenummer: 01112519.2
(22) Anmeldetag: 23.05.2001
(51) Int. Cl.: G06K 7/00, G06K 7/08

(54) **Schwingkreisanordnung**

(30) Priorität: 23.06.2000 DE 10029673
(71) Anmelder: ASTRA Gesellschaft für Asset Management mbH & Co. KG, 30890 Barsinghausen (DE)
(72) Erfinder: Stobbe, Anatoli, D-30890 Barsinghausen (DE)
(74) Vertreter: Patentanwälte Thömen & Körner

(57) **Zusammenfassung**

Es wird eine Schwingkreisanordnung eines Lesegerätes oder eines Schreib-/Lesegerätes oder eines Transponders für eine Daten- und Energieübertragung über den magnetischen Anteil eines elektromagnetischen Feldes beschrieben.
Dabei umfasst die Schwingkreisanordnung wenigstens eine Antennenspule (12,14), die als Induktivität zusammen mit weiteren frequenzbestimmenden Bauelementen einen Antennenschwingkreis bildet, und eine Abstimmvorrichtung (18).
Der Antennenschwingkreis ist mittels der Abstimmvorrichtung auf die Arbeitsfrequenzen unterschiedlicher Transpondersysteme abstimmbar.

## Beschreibung

Die Erfindung betrifft eine Schwingkreisanordnung eines Lesegerätes oder eines Schreib-/Lesegerätes oder eines Transponders nach dem Oberbegriff des Anspruchs 1.

Zur berührungslosen Identifikation von Gegenständen, Personen und Tieren dienen Systeme aus wenigstens einem Lesegerät oder Schreib-/Lesegerät und wenigstens einem Transponder. Dazu findet eine Datenübertragung zwischen dem Transponder und dem Lesegerät oder Schreib-/Lesegerät über ein elektromagnetisches Feld statt. Besonders verbreitet sind passive Transpondersysteme, bei denen der Transponder gleichzeitig vom Lesegerät oder Schreib-/Lesegerät mit Energie versorgt wird, so dass keine autarke Energiequelle im Transponder enthalten sein muss. Zur Energie- und Datenübertragung wird der magnetische Anteil eines elektromagnetischen Feldes genutzt und als Antennen Spulen eingesetzt, die die Induktivität eines Antennenschwingkreises darstellen.

Um bei passiven Transpondersystemen eine ausreichende Reichweite zu erzielen, ist neben einer einheitlichen Ausrichtung oder Polarisation der Antennenspulen von Lesegerät oder Schreib-/Lesegerät und Transponder außerdem eine Übereinstimmung der Resonanzfrequenz des Antennenschwingkreises mit der Arbeitsfrequenz wichtig.

In der Praxis ergibt sich das Problem, dass unterschiedliche Arbeitsfrequenzen auftreten können, sei es durch Toleranzen frequenzbestimmender Bauelemente desselben Transpondersystems oder durch unterschiedliche Nennfrequenzen unterschiedlicher Transpondersysteme. Ferner können auch frequenzverstimmende Einflüsse die Resonanzfrequenz des Antennenschwingkreis verändern.

Der Erfindung liegt die Aufgabe zugrunde, eine Schwingkreisanordnung eines Lesegerätes oder eines Schreib-/Lesegerätes oder eines Transponders zu schaffen, die an unterschiedliche Arbeitsfrequenzen anpassbar ist.

Diese Aufgabe wird bei einer Schwingkreisanordnung nach dem Oberbegriff des Anspruchs 1 durch die Merkmale dieses Anspruchs gelöst.

Weiterbildungen und vorteilhafte Ausgestaltungen der Erfindung ergeben sich aus den Unteransprüchen.

Durch die erfindungsgemäße Maßnahme lässt sich die Resonanzfrequenz des Antennenschwingkreises mit der jeweils gültigen Arbeitsfrequenz des Transpondersystems in Übereinstimmung bringen. Es wird dann eine maximale Energieübertragung zwischen dem Lesegerät oder Schreib-/Lesegerät und dem Transponder bei gleichzeitig optimaler Datenübertragung möglich. Eine Nachstimmung des Antennenschwingkreises kann sowohl dann nötig sein, wenn durch Toleranzen frequenzbestimmender Bauteile die Arbeitsfrequenz des Transpondersystems gewandert ist oder wenn unterschiedliche Transpondersysteme mit unterschiedlichen Nennfrequenzen denselben Antennenschwingkreis nutzen sollen.

Weiter kann der Antennenschwingkreis mittels der Abstimmvorrichtung bei Verstimmung, insbesondere durch Alterung oder Austausch der Bauelemente, klimatische Einflüsse, Änderung induktivitätsbeeinflussender Materialien in der Nähe der Antennenspule oder Änderung der Länge oder Art der Anschlussleitung zur Antennenspule, z. B. bei Reparatur oder Austausch, auf die Arbeitsfrequenz nachstimmbar sein.

Diese Maßnahme kommt dann zur Anwendung, wenn nicht die Arbeitsfrequenz wandert oder geändert wird, sondern die Resonanzfrequenz des Antennenschwingkreises gewandert ist und nicht mehr mit der Arbeitsfrequenz übereinstimmt. Hier werden also durch die Abstimmvorrichtung störende Einflüsse auf den Antennenschwingkreis kompensiert.

Der Antennenschwingkreis kann mehrere Antennenspulen umfassen, die mittels eines Umschalters mit den weiteren frequenzbestimmenden Bauelementen verbindbar sind. Der Antennenschwingkreis ist dann nach einer Umschaltung mittels der Abstimmvorrichtung auf seine Arbeitsfrequenz nachstimmbar.

Es ist dadurch möglich, dasselbe Lesegerät oder Schreib-/-Lesegerät oder denselben Transponder mit unterschiedlichen Antennenspulen zu betreiben. Je nach Ausführung und örtlicher Anordnung der Antennespulen können nämlich die Induktivitätswerte voneinander abweichen. Durch die erfindungsgemäße Maßnahme ist es in dem Fall möglich, nach Umschaltung auf eine andere Antennenspule den Antennenschwingkreis wieder mit der Arbeitsfrequenz in Resonanz zu bringen.

Vorzugsweise umfasst die Abstimmvorrichtung einen Speicher, in dem Parameter für die Abstimmung des Antennenschwingkreis auf seine Arbeitsfrequenz bei den einzelnen Schaltstellungen des Umschalters gespeichert sind. Eine Abstimmung erfolgt auf die Arbeitsfrequenz anhand der gespeicherten Parameter nach einer Umschaltung des Umschalters.

Durch Nutzung der gespeicherten Parameter läßt sich nach einer Umschaltung auf eine andere Antennenspule gezielt die Abstimmung des Antennenschwingkreises mit der neuen Antennenspule auf Resonanz herstellen. Eine bei jeder Umschaltung zu wiederholende Messung der Verstimmung und daraufhin vorzunehmende komplette Nachstimmung, die zeitaufwendig sein kann, entfällt dann.

Weitert kann unmittelbar nach Umschaltung des Umschalters zuerst eine Grobabstimmung anhand der gespeicherten Parameter erfolgen und anschließend eine Feinabstimmung in Abhängigkeit aktueller Werte der frequenzbestimmenden Bauelemente durchgeführt werden.

Bei dieser Weiterbildung ermöglicht die Grobabstimmung bereits eine ausreichende Energie- und Datenübertragung unmittelbar nach dem Umschalten. Die Feinabstimmung führt dann noch zu einer Optimierung. Dabei wird aber bereits aber von einer weitgehenden Übereinstimmung der Resonanzfrequenz mit dem optimalen Wert ausgegangen, wodurch der Zeitaufwand für den verbleibenden Abstimmvorgang auf den endgültigen Wert wesentlich geringer wird.

Die Parameter für die Abstimmung des Antennenschwingkreises auf seine Arbeitsfrequenz können in einer Lernphase ermittelt werden, in der alle belegten Stellungen des Umschalters nacheinander aktiviert werden.

Durch die Lernphase lassen sich die Parameter bei realistischen Arbeitsbedingungen ermitteln und so Werte gewinnen, die dem optimalen Wert entsprechen oder ihm sehr nahe kommen.

Außerdem können die in einer ersten Lernphase erhaltenen Parameter auf Anforderung oder turnusmäßig aktualisiert werden.

Hierdurch lassen sich nach der ersten Lernphase eingetretene Änderungen berücksichtigen und dadurch gewährleisten, daß die gespeicherten Parameter stets eine Abstimmung des Antennenschwingkreises an oder nahe seines Optimums bieten.

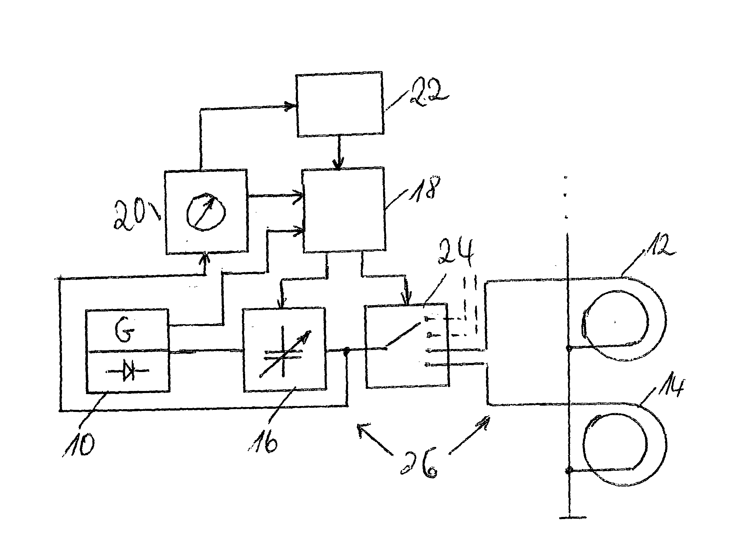

Nachfolgend wird die Erfindung anhand eines Ausführungsbeispiels näher erläutert, das als Blockschaltbild in der Zeichnung dargestellt ist.

Als Anwendungsbeispiel dient eine Schwingkreisanordnung mit mehreren Antennenspulen für ein Lesegerät, das in oder an der Schüttung eines Müllsammelfahrzeugs angeordnet ist. Das Lesegerät kommuniziert mit Transpondern, die in einer Aussparung eines umlaufenden Kragens eines Müllgefäßes oder auch an oder in der Wandung angeordnet sind. Der Transponder speichert im einfachsten Falle eine Identnummer, die mittels des Lesegerätes gelesen werden kann, um den aufgenommenen Müll beispielsweise für Abrechnungszwecke einem bestimmten Kunden zuordnen zu können.

Die der Schwingkreisanordnung des Lesegerätes zugordneten Antennenspulen können als Leseköpfe in oder an der Kammleiste sowie auch an anderen Orten der Schüttung eines Müllsammelfahrzeugs angeordnet sein. Dabei können in der Praxis folgende Fälle auftreten. Die Antennenspulen können für unterschiedliche Transponder an der gleichen Stelle angeordnet, aber unterschiedlich ausgerichtet sein. Ferner können die Antennenspulen an unterschiedlichen Stellen angeordnet sein. Bei unterschiedlichen Transpondersystemen kann es erforderlich sein, dass die Antennenschwingkreise mit denselben Antennenspulen auf unterschiedliche Frequenzen abgestimmt werden müssen. Schließlich sind noch Kombinationen dieser Fälle möglich.

Die Antennenspulen sind über Leitungen mit weiteren frequenzbestimmenden Bauelementen verbunden, die mit ihnen einen Antennenschwingkreis bilden. Diese weiteren frequenzbestimmenden Bauelemente können direkt an der Antennenspule angeordnet, in das Lesegerät integriert oder diesem räumlich benachbart sein.

Eine räumlich abgesetzte Anordnung der Antennenspulen hat den Zweck, bei Instandsetzungsarbeiten der z. B. betrieblich stark beanspruchten Kammleiste nur die Antennenspulen bzw. die Leseköpfe ersetzen zu müssen, während die übrigen frequenzbestimmenden Bauelemente und das Lesegerät weiterverwendet werden können. Da sie an geschützter Stelle untergebracht sein können, sind sie nicht vergleichbaren Belastungen wie die Antennenspulen ausgesetzt.

Bei Auswechseln der Antennenspulen können Fertigungstoleranzen eine abweichende Induktivität ergeben, die dann zu einer Verstimmung des Antennenschwingkreises führt. Weitere Einflüsse auf die Resonanzfrequenz werden durch die Leitungen zwischen der Antennenspule und den weiteren frequenzbestimmenden Bauelementen ausgeübt. So bewirkt eine Änderung der Länge der Leitung auch eine Änderung ihres induktiven und kapazitiven Anteils. Diese Anteile gehen ebenfalls in die Gesamtwerte der frequenzbestimmenden Bauteile ein.

Das Blockschaltbild zeigt ein Lesegerät 10 mit einem Generator für die Energieübertragung und einem Empfänger für Transponderdaten, das an eine Schwingkreisanordnung angeschlossen ist. Die Schwingkreisanordnung umfasst einen Antennenschwingkreis 26 aus Antennenspulen 12 und 14, die im Anwendungsfall z. B. in der Kammleiste angeordnet sind, und weiteren frequenzbestimmende Bauelemente 16 in Form von stetig oder stufenweise variablen Kapazitäten. Ferner umfasst die Schwingkreisanordnung eine Abstimmvorrichtung 18, mittels der durch Justieren der frequenzbestimmenden Bauelemente 16 der Antennenschwingkreis 26 auf Resonanz mit der Arbeitsfrequenz eingestellt werden kann.

Die Abweichung der Resonanzfrequenz des Antennenschwingkreises 26 von der Arbeitsfrequenz wird durch eine Messvorrichtung 20 ermittelt. Dies kann durch Messen der Spannung am Antennenschwingkreis 26 bei wenigstens zwei unterschiedlichen Abstimmpositionen und gleicher Arbeitsfrequenz oder bei derselben Abstimmposition und unterschiedlichen Arbeitsfrequenzen geschehen. Daraufhin kann dann die Abstimmvorrichtung 18 z. B. iterativ oder durch Extrapolation eine Korrektur in der Abstimmung des Antennenschwingkreises 26 vornehmen, bis ein Maximum der Spannung erreicht ist, also Resonanz eingetreten ist.

Zur wahlweisen Anschaltung einer der Antennenspulen 12, 14 an den Antennenschwingkreis 26 dient ein Umschalter 24. Dieser wird ebenfalls von der Abstimmvorrichtung 18 gesteuert, damit gleichzeitig mit der Umschaltung eine Änderung oder Anpassung der Abstimmung des Antennenschwingkreises 26 erfolgen kann. Eine Anpassung der Abstimmung kann auch bei unveränderter Arbeitsfrequenz erforderlich sein, um bei Antennenspulen mit unterschiedlichen Induktivitäten den Antennenschwingkreis 26 durch Änderung der weiteren frequenzbestimmenden Bauelemente 16 wieder in Resonanz zu bringen.

Außerdem ist eine Änderung der Abstimmung nötig, wenn die Arbeitsfrequenz geändert wird. Dieser Fall könnte von der Messvorrichtung 20 automatisch ermittelt werden, würde den Abstimmvorgang aber zeitlich ausdehnen. Eine schnellere Abstimmung ist möglich, wenn bei Frequenzänderung über ein Steuersignal vom Lesegerät 10 zur Abstimmvorrichtung 18 die Abstimmvorrichtung 18 veranlasst wird, den Abstimmvorgang mit einem größeren Änderungsschritt in Richtung auf die neue Einstellung einzuleiten.

Weiterhin können eine Umschaltung des Umschalters 24 und ein Wechsel der Arbeitsfrequenz gemeinsam erfolgen. Auch dann ist eine Nachstimmung des Antennenschwingkreises 26 wegen unterschiedlicher Induktivitäten der Antennenspulen 12, 14 und unterschiedlicher Arbeitsfrequenzen erforderlich.

Die Abstimmvorrichtung 18 ist ferner mit einem Speicher 22 verbunden, in dem Parameter für die Abstimmung des Antennenschwingkreises 26 auf seine Arbeitsfrequenz bei den einzelnen Schaltstellungen des Umschalters 24 und gegebenenfalls für unterschiedliche Arbeitsfrequenzen gespeichert sind. Abhängig von der Stellung des Umschalters 24 werden diese Parameter ausgewertet, um mittels der Abstimmvorrichtung 18 gezielt die Abstimmung des Antennenschwingkreises 26 auf Resonanz mit der bisherigen oder einer anderen Arbeitsfrequenz herbeizuführen. Es kann auch mittels der Parameter eine Grobabstimmung erfolgen, die dann durch eine Feinabstimmung ergänzt wird, indem die Messvorrichtung 20 unmittelbar nach der Grobabstimmung ergänzende Korrekturwerte an die Abstimmvorrichtung 18 liefert.

Zur erstmaligen Gewinnung der Parameter wird so vorgegangen, daß in einer Lernphase zunächst in jeder Schaltstellung des Umschalters 24 die gültigen Parameter durch die Messvorrichtung 20 ermittelt und im Speicher 22 abgespeichert werden. Diese Phase kann in turnusmäßigen Abständen oder auf Anforderung wiederholt werden, um aktuelle Parameter zu erhalten.

Bei Umschaltung auf eine der Antennenspulen 12, 14 werden dann die zugehörigen Parameter abgerufen und entsprechend die Abstimmung des Antennenresonanzkreises 26 mittels der Abstimmvorrichtung 18 durch Variation abstimmbarer frequenzbestimmender Bauteile 16 durchgeführt.

Es ist auch möglich, dass die bei einer anschließenden Feinabstimmung gefundenen Parameter jeweils die gespeicherten Parameter ersetzen, um so eine dynamische Aktualisierung der Parameter zu erhalten.

Neben den hier dargestellten zwei Antennenspulen 12, 14 können auch weitere Antennenspulen vorgesehen sein, wenn diese z. B. nicht nur an der Kammleiste, sondern auch an anderen Stellen einer oder mehrerer Schüttungen angeordnet werden sollen. Es werden dann entsprechend mehr Schaltstellungen für den Umschalter 24 vorgesehen und ebenfalls mehrere Speicherplätze im Speicher 22 zur Speicherung der Parameter. Im übrigen erfolgt aber die Umschaltung und die Gewinnung und Aktualisierung der Parameter in analoger Weise, wie für die zwei Antennenspulen 12, 14 beschrieben ist.

## Patentansprüche

1. Schwingkreisanordnung eines Lesegerätes (10) oder eines Schreib-/Lesegerätes oder eines Transponders für eine Daten-und Energieübertragung über den magnetischen Anteil eines elektromagnetischen Feldes, wobei die Schwingkreisanordnung wenigstens eine Antennenspule (12), die als Induktivität zusammen mit weiteren frequenzbestimmenden Bauelementen (16) einen Antennenschwingkreis (26) bildet, und eine Abstimmvorrichtung (18) umfasst, **dadurch gekennzeichnet, dass** der Antennenschwingkreis (26) mittels der Abstimmvorrichtung (18) auf die Arbeitsfrequenzen unterschiedlicher Transpondersysteme abstimmbar ist.

2. Schwingkreisanordnung nach Anspruch 1, **dadurch gekennzeichnet, dass** der Antennenschwingkreis (26) mittels der Abstimmvorrichtung (18) bei Verstimmung, insbesondere durch Alterung oder Austausch der Bauelemente, klimatische Einflüsse, Änderung induktivitätsbeeinflussender Materialien in der Nähe der Antennenspule oder Änderung der Länge oder Art der Anschlussleitung zur Antennenspule, auf seine Arbeitsfrequenz nachstimmbar ist.

3. Schwingkreisanordnung nach Anspruch 1 oder 2, **dadurch gekennzeichnet, dass** der Antennenschwingkreis (26) mehrere Antennenspulen (12, 14) umfasst, die mittels eines Umschalters (24) mit den weiteren frequenzbestimmenden Bauelementen (16) verbindbar sind, und nach einer Umschaltung auf seine Arbeitsfrequenz nachstimmbar ist.

4. Schwingkreisanordnung nach Anspruch 3, **dadurch gekennzeichnet, dass** die Abstimmvorrichtung (18) einen Speicher (22) umfasst, in dem Parameter für die Abstimmung des Antennenschwingkreises (26) auf seine Arbeitsfrequenz bei den einzelnen Schaltstellungen des Umschalters (24) gespeichert sind und dass eine Abstimmung auf die Arbeitsfrequenz anhand der gespeicherten Parameter nach einer Umschaltung des Umschalters (24) erfolgt.

5. Schwingkreisanordnung nach Anspruch 3 oder 4, **dadurch gekennzeichnet, dass** unmittelbar nach Umschaltung des Umschalters (24) zuerst eine Grobabstimmung anhand der gespeicherten Parameter erfolgt und anschließend eine Feinabstimmung in Abhängigkeit aktueller Werte einer Messvorrichtung (20) an den frequenzbestimmenden Bauelementen (16) durchführbar ist.

6. Schwingkreisanordnung nach einem der Ansprüche 3 bis 5, **dadurch gekennzeichnet, dass** die Parameter für die Abstimmung des Antennenschwingkreises (26) auf seine Arbeitsfrequenz in einer Lernphase ermittelbar sind, in der alle belegten Stellungen des Umschalters (24) nacheinander aktivierbar sind.

7. Schwingkreisanordnung nach Anspruch 6, **dadurch gekennzeichnet, dass** die in einer ersten Lernphase erhaltenen Parameter auf Anforderung oder turnusmäßig aktualisierbar sind.
